# EUROPEAN PATENT APPLICATION

(11) **EP 2 717 525 A1**
(43) Date of publication of application: **09.04.2014**
(21) Application number: 12867084.1
(22) Date of filing: 27.10.2012
(51) Int. Cl.: H04L 12/713

(54) **METHOD, ROUTING DEVICE AND SYSTEM FOR REDUNDANT BACKUP OF NETWORK DEVICE**

(30) Priority: 05.02.2012 CN 201210024527
(71) Applicant: Huawei Technologies Co., Ltd, Shenzhen, Guangdong 518129 (CN)
(72) Inventor: CHEN, Wei, Shenzhen Guangdong 518129 (CN); ZHANG, Qiang, Shenzhen Guangdong 518129 (CN); GAO, Caiqin, Shenzhen Guangdong 518129 (CN); WEN, Shuangquan, Shenzhen Guangdong 518129 (CN)
(74) Representative: Isarpatent
(86) International application number: PCT/CN2012/083636
(87) International publication number: WO 2013/113228

(57) **Abstract**

A method for network device redundancy backup, including: performing communication and exchanging a VRRP message directly between VRRP master and backup routers to negotiate a master and backup relationship; and, sending, by the VRRP master device using an interface connected to an access device, a gratuitous ARP packet to the access device, so as to instruct the access device to direct user traffic to the VRRP master router. According to this method, the VRRP master and backup routers communicate and exchange a VRRP message directly, and the VRRP master router sends a gratuitous ARP packet to an access device through an interface connected to the access device, so as to solve the problem in the prior art that the VRRP protocol fails to run normally because the access device cannot forward a VRRP packet.

## Description

This application claims priority to Chinese Patent Application No. 201210024527.9, filed with the Chinese Patent Office on February 5, 2012 and entitled "METHOD, ROUTING DEVICE, AND SYSTEM FOR NETWORK DEVICE REDUNDANCY BACKUP", which is incorporated herein by reference in its entirety.

### TECHNICAL FIELD

The present invention relates to the field of communications technologies, and in particular, to a method, a routing device, and a system for network device redundancy backup.

### BACKGROUND

The Virtual Router Redundancy Protocol VRRP (Virtual Router Redundancy Protocol, VRRP) is a fault-tolerant protocol, where if a local area network has two or more routers, a host in the local area network may communicate with another network by using any one of the routers. When the VRRP is used, if a next-hop router of the host in the local area network fails, it may be timely replaced by another router, so as to ensure communication continuity and reliability. An administrator configures the same virtual router group identifier and a virtual IP address for different routers within the same network segment, so that they form a virtual router. The virtual router consists of one master router (Master router) and several backup routers (Backup router), where the master router actually implements a function of packet forwarding. When the master router fails, one of the backup routers becomes a new master router and takes over an operation thereof.

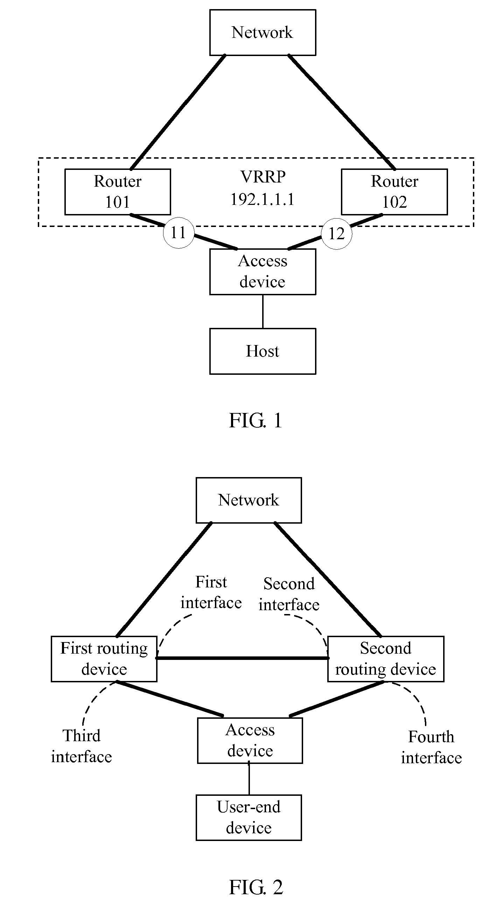

As shown in FIG. 1 where FIG. 1 illustrates a VRRP networking mode in the prior art, where a router 101 and a router 102 are connected to an access device through a link 11 and a link 12, respectively; and a VRRP packet between the router 101 and the router 102 is forwarded by the access device. The router 101 and the router 102 form a virtual router. This virtual router has one virtual IP address 192.1.1.1. A host in a local area network is aware only of the virtual IP address 192.1.1.1 but is not aware of an IP address of the router 101 or an IP address of the router 102. The host in the local area network sets a default route thereof to the IP address 192.1.1.1 of the virtual router. After that, the host in the local area network communicates with another network by using the virtual router. The router 101 and the router 102 form a VRRP backup group.

In the VRRP protocol, routers in a backup group interact with each other by using a VRRP packet to elect a master router. The VRRP defines three states: an initialize state (Initialize), a master state (Master), and a backup state (Backup). The VRRP master router is in the master state, and VRRP backup routers are in the backup state.

This networking mode requires the access device to support a VRRP broadcast function. However, in actual use, many access devices do not have the VRRP broadcast function, or the VRRP broadcast function of the switch needs to be disabled under some scenarios, resulting in that a VRRP packet sent by the VRRP master router cannot be forwarded to the VRRP backup router after reaching the access device, thereby failing to implement the VRRP protocol normally under such scenarios.

### SUMMARY

Embodiments of the present invention provide a method, a routing device, and a system to solve the problem in the prior art that the VRRP protocol fails to operate normally because a user access device cannot forward a VRRP packet.

In one aspect, an embodiment of the present invention provides a method for network device redundancy backup, where the method is applicable to a system including a first routing device, a second routing device, and an access device; the first routing device includes a first interface and a third interface; the second routing device includes a second interface and a fourth interface; the first interface communicates with the second interface; the first interface and the second interface are enabled with the Virtual Router Redundancy Protocol VRRP respectively so that the first routing device and the second routing device form a VRRP backup group; the first routing device communicates with the access device through the third interface; and the second routing device communicates with the access device through the fourth interface; where the method includes: setting, by the first routing device, a VRRP state of the first routing device to a master state; setting, by the second routing device, a VRRP state the second routing device to a backup state; and then sending, by the first routing device, a gratuitous Address Resolution Protocol (Gratuitous Address Resolution Protocol, gratuitous ARP) packet to the access device through the third interface, so as to instruct the access device to direct user traffic to the first routing device.

In another aspect, an embodiment of the present invention provides a first routing device acting as a member of a Virtual Router Redundancy Protocol VRRP backup group, where:
the first routing device includes a first interface and a third interface; where the first interface communicates with a second routing device; the second routing device is another routing device in the VRRP backup group; the first interface is enabled with the VRRP; and the third interface communicates with an access device; and
the first routing device further includes a first setting unit, a first request sending unit, a first VRRP transceiving unit, and a first determining unit, where
the first setting unit is configured to set a VRRP state of the first routing device, where the first setting unit sets the VRRP state of the first routing device to a master state after VRRP initialization, and the first setting unit retains the VRRP state of the first routing device as a current state when the first interface is down;
the first request sending unit is configured to send a gratuitous ARP packet to the access device through the third interface, so as to instruct the access device to direct user traffic to the first routing device;
the first VRRP transceiving unit is configured to receive and send a VRRP packet on the first interface; and
the first determining unit is configured to, after the first interface becomes up again after being down, determine whether the first routing device needs to retain the current VRRP state or to change into another VRRP state;
if a determining result indicates that the VRRP master state needs to be retained, the first request sending unit sends a gratuitous ARP packet to the third device through the third interface; and the first VRRP transceiving unit sends a VRRP packet to the second routing device through the first interface, so that the second routing device changes a VRRP state of the second routing device into a backup state.

In another aspect, an embodiment of the present invention provides a second routing device acting as a member of a Virtual Router Redundancy Protocol VRRP backup group, where:
the second routing device includes a second interface and a fourth interface; the second interface communicates with a first routing device; the first routing device is another routing device in the VRRP backup group; the second interface is enabled with the VRRP; and the fourth interface communicates with an access device;
the second routing device further includes a second setting unit, a second request sending unit, a second VRRP transceiving unit, and a second determining unit, where
the second setting unit is configured to set a VRRP state of the second routing device, where the second setting unit sets a VRRP state of the second routing device to a backup state after VRRP initialization, and the second setting unit retains the VRRP state of the second routing device as a current state when the second interface is down;
the second request sending unit is configured to send a gratuitous ARP packet to the access device through the fourth interface, so as to instruct the access device to direct user traffic to the second routing device;
the second VRRP transceiving unit is configured to receive and send a VRRP packet on the second interface; and
the second determining unit is configured to, after the second interface becomes up again, determine whether the second routing device needs to retain the current VRRP state or to change into another VRRP state;
if a determining result indicates that the VRRP master state needs to be changed into the backup state, the second routing device changes the VRRP state of the second routing device into the backup state;
when the second interface is down and does not become up within a preset period, the second setting unit sets the VRRP state of the second routing device to a master state; and the second request sending unit sends a gratuitous ARP packet to the access device through the fourth interface.

In another aspect, an embodiment of the present invention provides a system for network device redundancy backup, including a first routing device and a second routing device, where
the first routing device includes a first interface and a third interface; the second routing device includes a second interface and a fourth interface; the first interface and the second interface run the Virtual Router Redundancy Protocol VRRP so that the first routing device and the second routing device form a VRRP backup group; the first interface communicates with the second interface; the first routing device communicates with an access device through the third interface; and the second routing device communicates with the access device through the fourth interface; and
the first routing device further includes a first setting unit, a first request sending unit, a first VRRP transceiving unit, and a first determining unit; and
the second routing device further includes a second setting unit, a second request sending unit, a second VRRP transceiving unit, and a second determining unit;
where:
the first setting unit is configured to set a VRRP state of the first routing device, where the first setting unit sets the VRRP state of the first routing device to a master state after VRRP initialization, and the first setting unit retains the VRRP state of the first routing device as a current state when the first interface is down;
the first request sending unit is configured to send a gratuitous ARP packet to the access device through the third interface, so as to instruct the access device to direct user traffic to the first routing device;
the first VRRP transceiving unit is configured to receive and send a VRRP packet between the first interface and the second interface;
the first determining unit is configured to, after the first interface becomes up again after being down, determine whether the first routing device needs to retain the current VRRP state or to change into another VRRP state;
if a determining result indicates that the VRRP master state needs to be retained, the first request sending unit sends a gratuitous ARP packet to the third device through the third interface; and the first VRRP transceiving unit sends a VRRP packet to the second routing device through the first interface, so that the second routing device changes a VRRP state of the first routing device into a backup state;
the second setting unit is configured to set a VRRP stateof the second routing device, and the second setting unit sets a VRRP state of the second routing device to a backup state after VRRP initialization;
when the second interface is down, the second setting unit retains the VRRP state of the second routing device as a current state;
the second request sending unit is configured to send a gratuitous ARP packet to the access device through the fourth interface, so as to instruct the access device to direct user traffic to the second routing device;
the second VRRP transceiving unit is configured to receive and send a VRRP packet between the second interface and the first interface;
the second determining unit is configured to, after the second interface becomes up again after being down, determine whether the second routing device needs to retain the current VRRP state or to change into another VRRP state;
if a determining result indicates that the VRRP master state needs to be changed into the backup state, the second routing device changes the VRRP state of the second routing device into the backup state;
when the second interface is down and does not become up within a preset period, the second setting unit sets the VRRP state of the second routing device to a master state; and the second request sending unit sends a gratuitous ARP packet to the access device through the fourth interface. In the technical solutions according to the embodiments of the present invention, a VRRP master router and a VRRP backup router communicate and exchange a VRRP message directly, and the VRRP master router directly exchanges a VRRP packet with the VRRP backup router to achieve an objective of negotiating a master and backup relationship; moreover, the VRRP master router sends a request packet to an access device through an interface connected to the access device, so as to instruct the access device to direct user traffic to the VRRP master router. This solves the problem of the prior art that the VRRP protocol fails to run normally because the access device cannot forward a VRRP packet.

### BRIEF DESCRIPTION OF DRAWINGS

FIG. 1 is a schematic diagram illustrating VRRP networking in the prior art;
FIG. 2 is a schematic diagram illustrating networking to which a method for network device redundancy backup according to Embodiment 1 of the present invention is applicable;
FIG. 3 is a flowchart of a method for network device redundancy backup according to Embodiment 1 of the present invention;
FIG. 4 is a schematic diagram of a first routing device according to Embodiment 2 of the present invention; and
FIG. 5 is a schematic diagram of a second routing device according to Embodiment 2 of the present invention.

### DESCRIPTION OF EMBODIMENTS

A method for network device redundancy backup according to embodiments of the present invention can solve the problem in the prior art that the VRRP protocol fails to operate normally because an access device cannot forward a VRRP packet. An embodiment of the present invention further provides a corresponding device and system. Detailed descriptions are provided below.

### Embodiment 1

FIG. 2 is a networking diagram according to Embodiment 1 of the present invention, where a first routing device includes a first interface and a third interface; a second routing device includes a second interface and a fourth interface; the first interface is directly connected to the second interface, where being directly connected refers to being connected by using a direct connection line (or referred to as a heartbeat line); the first routing device communicates with an access device through the third interface; and the second routing device communicates with the access device through the fourth interface.

The first routing device and the second routing device may be a router or be a switch having a layer-3 switching function in terms of a device form, and may be a network-provider edge router (Network-Provider Edge, NPE), a service router (Service Router, SR), or a broadband remote access server (Broadband Remote Access Server, BRAS) in terms of a networking position.

The access device may be a switch or a user-end provider edge router (User-end Provider Edge, UPE).

The first interface and the second interface may be Eth-Trunk interfaces, virtual Ethernet (Virtual Ethernet, VE) interfaces, or Vlanif interfaces.

A link between the third interface and the access device as well as a link between the fourth interface and the access device may be a physical link or a pseudo wire (Pseudo Wire, PW).

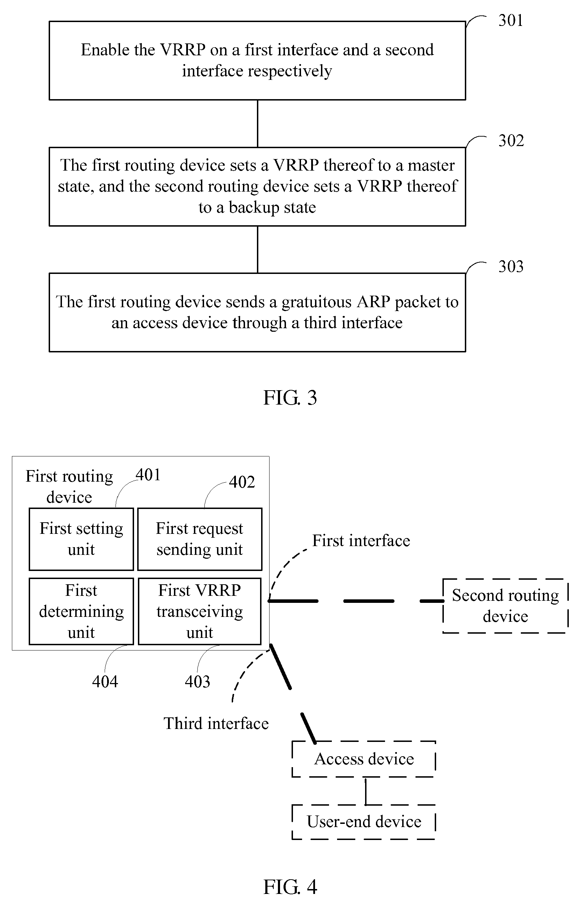

FIG. 3 illustrates a method for network device redundancy backup according to Embodiment 1 of the present invention, including the following:
301. Enable the VRRP on the first interface and the VRRP on the second interface respectively.

After the first interface and the second interface are enabled with the VRRP respectively, the first routing device and the second routing device form a VRRP backup group.

302. The first routing device sets a VRRP of the first routing device to a master state, and the second routing device sets a VRRP of the second routing device to a backup state.

The VRRP defines three states: an initialize state (Initialize), a master state (Master), and a backup state (Backup). The first routing device and the second routing device enter into the initialize state after step 301. According to the specification in the VRRP protocol (RFC 3768), a VRRP master device (where the master device corresponds to the master state) is selected according to VRRP priorities. Two election methods are available: priorities are compared, and the one having a higher priority is elected as the VRRP master device; when two routers having the same priority compete to be the VRRP master device, interface IP addresses are compared, and the one having a greater interface IP address is elected as the VRRP master device.

In this step, it is assumed that the first routing device has a higher priority and therefore is a VRRP master device; and the second routing device has a lower priority and therefore is a VRRP backup device.

303. The first routing device sends a gratuitous ARP packet to the access device through the third interface.

The first routing device sends the gratuitous ARP packet to the access device to instruct the access device to direct user traffic to the first routing device.

In the technical solution according to Embodiment 1 of the present invention, the first routing device and the second routing device are directly connected, the first interface and the second interface run the VRRP protocol to perform negotiation of VRRP master and backup relationship, so that the VRRP communication between the first routing device and the second routing device does not involve the access device. This solves the problem of the prior art that the VRRP protocol fails to run normally because the access device cannot forward a VRRP packet (having no VRRP broadcast function, or in some scenarios where the VRRP broadcast function of the access device needs to be disabled).

In addition, in the prior art, after an interface of a router is enabled with the VRRP protocol, the router sends a VRRP packet and a gratuitous ARP packet through this interface. According to the solution of the prior art, in the networking scenario illustrated in Embodiment 1 of the present invention (referring to FIG. 2), if the gratuitous ARP packet is sent from the first interface, the first routing device cannot instruct the access device to direct the user traffic to the first routing device. However, in the technical solution according to Embodiment 1 of the present invention, the first routing device exchanges a VRRP packet with the second routing device through the first interface, and sends a gratuitous ARP packet to the access device through the third interface. That is, the first routing device sends the first VRRP packet and the gratuitous ARP packet through different interfaces, which solves the problem of the prior art that in the networking scenario illustrated in FIG. 2, the first routing device acting as the VRRP master device cannot instruct the access device to direct the user traffic to the first routing device.

Alternatively, after the first routing device sets the VRRP of the first routing device to the master state and the second routing device sets the VRRP of the second routing device to the backup state, the method according to Embodiment 1 of the present invention further includes: when a direct connection line between the first interface and the second interface fails, resulting in that the first interface and the second interface both are down, retaining, by the first routing device, the VRRP state of the first routing device as a current state, that is, the master state; and retaining, by the second routing device, the VRRP state the second routing device as a current state, that is, the backup state.

In the prior art, when the interfaces of the first routing device and second routing device are down, the VRRP states of the first routing device and the second routing device transit to the initialize state. In the initialize state, the first routing device and the second routing device cannot forward a packet of the access device illustrated in FIG. 2, resulting in service interruption. In the technical solution according to Embodiment 1 of the present invention, after the direct connection line between the first interface and the second interface is off, the first routing device still retains the VRRP state as the master state, so that a packet of a user-end device still can be forwarded by the first routing device, so as to ensure that the service is not interrupted.

When the second interface is down and does not become up within a preset period, the second routing device sets the VRRP state of the second routing device to a master state. After the second routing device sets the VRRP state of the second routing device to the master state, the second routing device periodically sends a VRRP packet to the first routing device through the second interface; and the second routing device sends a gratuitous ARP packet to the access device through the fourth interface to instruct the access device to direct the user traffic to the second routing device.

In the prior art, after an interface of a router is enabled with the VRRP protocol, the router sends a VRRP packet and a gratuitous ARP packet through this interface. If the solution of the prior art is employed, in the networking scenario illustrated in Embodiment 1 of the present invention (referring to FIG. 2), after the second routing device sets the VRRP state of the second routing device to the master state, the gratuitous ARP packet is sent through the second interface, resulting in that the second routing device cannot instruct the access device to direct the user traffic to the second routing device. However, in the technical solution according to Embodiment 1 of the present invention, the second routing device exchanges a VRRP packet with the first routing device through the second interface, and sends a gratuitous ARP packet to the access device through the fourth interface. That is, the second routing device sends the VRRP packet and the gratuitous ARP packet through different interfaces, which solves the problem of the prior art that in the networking scenario illustrated in FIG. 2, the second routing device acting as the VRRP master device cannot instruct the access device to direct the user traffic to the first routing device.

Alternatively, the second routing device sets, when the second interface is down and does not become up within a preset period, the VRRP state of the second routing device to the master state, and sends the gratuitous ARP packet to the access device through the fourth interface to instruct the access device to direct the user traffic to the second routing device; then, the direction connection line is recovered from the failure, and the first interface and the second interface both become up. The first routing device receives, from the first interface, a VRRP packet sent by the second routing device. The first routing device determines, according to information in the VRRP packet, whether the first routing device needs to retain the VRRP master state. If a determining result indicates that the master state needs to be retained, the first routing device sends a gratuitous ARP packet to the access device through the third interface, so as to instruct the access device to direct the user traffic to the first routing device; what's more, the first routing device sends a VRRP packet to the second routing device through the second interface, so that the second routing device changes the VRRP state of the second routing device into the backup state.

Because it is assumed in step 302 that the first routing device has a higher VRRP priority than the second routing device, if no other event occurs (for example, the priority of the first routing device and/or the second routing device is manually adjusted) within the period for the direct connection line to recover from the interruption, the priority carried in the VRRP packet sent by the second routing device is lower than the priority of the first routing device, in which case the first device determines that the VRRP master state of the first device needs to be retained.

In the prior art, the VRRP master device, upon receiving a VRRP packet sent by another VRRP device in the same VRRP backup group, determines whether the VRRP master device needs to retain the VRRP master state; retains the VRRP master state of the VRRP master device and performs no other operation if a determining result is yes; otherwise, resets the VRRP state of the VRRP master device to a backup state. The VRRP device in the VRRP backup state cannot forward a packet of the access device. If the solution of the prior art is employed, in the network scenario illustrated in Embodiment 1 of the present invention (referring to FIG. 2), after the direct connection line is recovered from the failure, the first routing device and the second routing device both are in the VRRP master state, and sends a VRRP packet to each other to re-negotiate a VRRP master and backup relationship, the following result is caused: the first routing device determines that the VRRP master state of the first routing device needs to be retained, and performs no other operation; and the second routing device changes the VRRP state of the second routing device from the master state into the backup state. This may cause the user traffic to be forwarded by the second routing device in the VRRP backup state, resulting in service interruption.

In the technical solution according to Embodiment 1 of the present invention, the first routing device acting as the VRRP master device, upon receiving the VRRP packet sent by the second routing device, determines that the first routing device still needs to retain the VRRP state of the first routing device as the master state, and sends a gratuitous ARP packet to the access device through the second interface of the first routing device, so as to instruct the access device to re-direct the user traffic to the first routing device, which ensures that no service interruption occurs.

### Embodiment 2

This embodiment of the present invention provides a system for network device redundancy backup, including a first routing device and a second routing device that run VRRP and form a VRRP backup group. In this embodiment, master and backup VRRP devices are determined according to VRRP priorities, where a VRRP device having a higher priority is used as a master device. Assume that in an initialize state, the first routing device has a higher priority than the second routing device; then, after initialization, a VRRP state of the first routing device is set to a master state, and a VRRP state of the second routing device is set to a backup state.

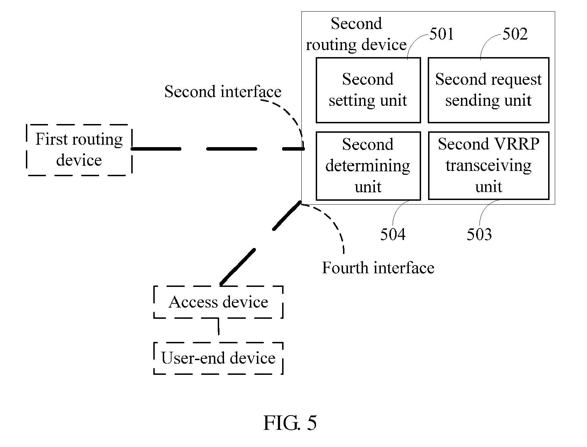

Referring to FIG. 4 and FIG. 5, the first routing device includes a first interface and a third interface; the second routing device includes a second interface and a fourth interface; the first interface is directly connected to the second interface, where being directly connected refers to being connected by using a direct connection line (or referred to as a heartbeat line); the first routing device communicates with an access device through the third interface; the second routing device communicates with the access device through the fourth interface; the first routing device further includes a first setting unit 401, a first request sending unit 402, a first VRRP transceiving unit 403, and a first determining unit 404; and the second routing device further includes a second setting unit 501, a second request sending unit 502, a second VRRP transceiving unit 503, and a second determining unit 504;
where:
the first setting unit 401 is configured to set the VRRP state of the first routing device; and during VRRP initialization, the first setting unit 401 sets the VRRP state of the first routing device to the master state;
the first request sending unit 402 is configured to send a gratuitous ARP packet to the access device through the third interface, so as to instruct the access device to direct user traffic to the first routing device;
the first VRRP transceiving unit 403 is configured to receive and send a VRRP packet between the first interface and the second interface; and
the first determining unit 404 is configured to, when the first interface becomes up again, determine whether the first routing device needs to retain a current VRRP state or change into another VRRP state; if a determining result indicates that the VRRP master state needs to be retained, the first request sending unit 402 sends a gratuitous ARP packet to the access device; the first VRRP transceiving unit 403 sends a VRRP packet to the second interface of the second routing device through the first interface, so that the second routing device changes the VRRP state of the second routing device into the backup state.

After the VRRP state of the first routing device is set to the master state, the first request sending unit 402 sends the gratuitous ARP packet to the access device, so as to instruct the access device to direct the user traffic to the first routing device.

When the first interface is down, the first setting unit 401 retains the VRRP state of the first routing device as the current state, that is, the master state.

When the first interface becomes up again, the first VRRP transceiving unit 403 receives a VRRP packet sent by the second routing device through the second interface.

The first determining unit 404, according to information in the VRRP packet, determines whether the first routing device still needs to retain the VRRP master state.

If a determining result indicates that the VRRP master state needs to be retained, the first request sending unit 402 sends the gratuitous ARP packet to the access device through the third interface, so as to re-instruct the access device to direct the user traffic to the first routing device; and the first VRRP transceiving unit 403 sends the VRRP packet to the second interface of the second routing device through the first interface, so that the second routing device changes the VRRP state of the second routing device into the backup state.

Because after the VRRP initialization, the first routing device has a higher VRRP priority than the second routing device, if no other event occurs (for example, the priority of the first routing device and/or the second routing device is manually adjusted) within the period for the direct connection line to recover from the interruption, the priority carried in the VRRP packet sent by the second routing device is lower than the priority of the first routing device, in which case the first device determines that the VRRP master state of the first device needs to be retained.

The second setting unit 501 is configured to set the VRRP state of the second routing device. During VRRP initialization, the second setting unit 501 sets the VRRP state of the second routing device to the backup state. When the second interface is down, the second setting unit 501 retains the VRRP state of the second routing device as a current state, that is, the backup state.

The second request sending unit 502 is configured to send a gratuitous ARP packet to the access device through the fourth interface, so as to instruct the access device to direct user traffic to the second routing device.

The second VRRP transceiving unit 503 is configured to receive and send a VRRP packet between the second interface and the first interface of the first routing device.

The second determining unit 504 is configured to, after the second interface becomes up again, determine whether the second routing device needs to retain the current VRRP state or to change into another VRRP state.

If a determining result indicates that the VRRP master state needs to be changed into the backup state, the second routing device changes the VRRP state of the second routing device into the backup state.

When the second interface is down and does not become up within a preset period, the second setting unit 501 sets the VRRP state of the second routing device to a master state; and the second request sending unit 502 sends a gratuitous ARP packet to the access device through the fourth interface.

When the second interface becomes up again, the second VRRP transceiving unit 503 receives, from the second interface, a VRRP packet sent by the first routing device through the first interface.

The second determining unit 504, according to information in the VRRP packet, determines whether the second routing device still needs to retain the VRRP master state.

If a determining result indicates that the VRRP master state needs to be changed into the backup state, the second routing device changes the VRRP state of the second routing device into the backup state.

Because after the VRRP initialization, the second routing device has a lower VRRP priority than the first routing device, if no other event occurs (for example, the priority of the second routing device and/or the first routing device is manually adjusted) within the period for the direct connection line to recover from the interruption, the priority carried in the VRRP packet sent by the first routing device is higher than the priority of the second routing device, in which case the second device determines that the VRRP master state of the second device needs to be changed in into the backup state.

The first routing device and the second routing device may be a router or be a switch having a layer-3 switching function in terms of a device form, and may be an NPE, a service router SR, or a BRAS device in terms of a networking position. The access device may be a switch or a UPE. The first interface may be an Eth-Trunk interface, a virtual Ethernet (Virtual Ethernet, VE) interface, or a Vlanif interface. The connection between the third interface and the access device may be a physical link or a PW. The connection between the fourth interface and the access device may be a physical link or a PW.

In this embodiment of the present invention, the VRRP master router and the VRRP backup router communicate and exchange the VRRP message directly, where the VRRP master router exchanges a VRRP packet with the VRRP backup router to achieve an objective of negotiating a master and backup relationship; moreover, the VRRP master router sends the gratuitous ARP packet to the access device through the interface connected to the access device, so as to instruct the access device to direct the user traffic to the VRRP master router. This solves the problem of the prior art that the VRRP protocol fails to run normally because the access device cannot forward a VRRP packet.

The first determining unit 401, the first request sending unit 402, the first determining unit 404, the first VRRP transceiving unit 403, the second setting unit 501, the second request sending unit 502, the second determining unit 504, and the second VRRP transceiving unit 503 all may be implemented by hardware. A person of ordinary skill in the art may understand that all or a part of the steps of the various methods according to the embodiments may be implemented by a program instructing relevant hardware. The program may be stored in a computer readable storage medium. The storage medium may include a read-only memory, a random access memory, a magnetic disk, an optical disk, and so on.

The method, routing device, and system for network device redundancy backup according to the embodiments of the present invention are described above in detail. However, the embodiments are described merely to help to understand the method and core idea of the present invention, and shall not be understood as a limit on the present invention. Variations or replacements that may be easily thought of by a person skilled in the art within the technical scope disclosed in the present invention shall fall within the protection scope of the present invention.

## Claims

1. A method for network device redundancy backup, wherein the method is applicable to a system comprising a first routing device, a second routing device, and an access device; the first routing device comprises a first interface and a third interface; the second routing device comprises a second interface and a fourth interface; the first interface communicates with the second interface; the first interface and the second interface are enabled with the Virtual Router Redundancy Protocol VRRP respectively so that the first routing device and the second routing device form a VRRP backup group; the first routing device communicates with the access device through the third interface; and the second routing device communicates with the access device through the fourth interface; wherein the method comprises:
setting, by the first routing device, a VRRP state of the first routing device to a master state; setting, by the second routing device, a VRRP state of the second routing device to a backup state; and then sending, by the first routing device, a gratuitous Address Resolution Protocol ARP packet to the access device through the third interface, so as to instruct the access device to direct user traffic to the first routing device.

2. The method according to claim 1, the method further comprising: when the first interface is down, retaining, by the first routing device, the VRRP state of the first routing device as a current state.

3. The method according to claim 1, the method further comprising: when the second interface is down, retaining, by the second routing device, the VRRP state of the second routing device as a current state.

4. The method according to claim 3, further comprising:
when the second interface is down and does not become up within a preset period, setting, by the second routing device, the VRRP state of the second routing device to a master state; and
sending, by the second routing device, a gratuitous ARP packet to the access device through the fourth interface, so as to instruct the access device to direct the user traffic to the second routing device.

5. The method according to claim 2, further comprising:
after the first interface becomes up again, receiving, by the first routing device through the first interface, a VRRP packet sent by the second routing device;
determining, by the first routing device according to information in the VRRP packet, whether the first routing device needs to retain the VRRP master state; and
if a determining result indicates that the VRRP master state needs to be retained, sending, by the first routing device, a gratuitous ARP packet to the access device through the third interface, so as to instruct the access device to direct the user traffic to the first routing device; and sending, by the first routing device, a VRRP packet to the second routing device through the second interface, so that the second routing device changes the VRRP state of the second routing device into the backup state.

6. A first routing device, acting as a member of a Virtual Router Redundancy Protocol VRRP backup group, wherein:
the first routing device comprises a first interface and a third interface; wherein the first interface communicates with a second routing device; the second routing device is another routing device in the VRRP backup group; the first interface is enabled with the VRRP; and the third interface communicates with an access device;
the first routing device further comprises a first setting unit, a first request sending unit, a first VRRP transceiving unit, and a first determining unit, wherein
the first setting unit is configured to set a VRRP state of the first routing device, wherein the first setting unit sets the VRRP state of the first routing device to a master state after VRRP initialization, and the first setting unit retains the VRRP state of the first routing device as a current state when the first interface is down;
the first request sending unit is configured to send a gratuitous Address Resolution Protocol ARP packet to the access device through the third interface, so as to instruct the access device to direct user traffic to the first routing device;
the first VRRP transceiving unit is configured to receive and send a VRRP packet on the first interface; and
the first determining unit is configured to, after the first interface becomes up again after being down, determine whether the first routing device needs to retain the current VRRP state or to change into another VRRP state; and
if a determining result indicates that the VRRP master state needs to be retained, the first request sending unit sends a gratuitous ARP packet to the third device through the third interface; and the first VRRP transceiving unit sends a VRRP packet to the second routing device through the first interface, so that the second routing device changes a VRRP state of the second routing device into a backup state.

7. A second routing device, acting as a member of a Virtual Router Redundancy Protocol VRRP backup group, wherein:
the second routing device comprises a second interface and a fourth interface; wherein the second interface communicates with a first routing device; the first routing device is another routing device in the VRRP backup group; the second interface is enabled with the VRRP; and the fourth interface communicates with an access device; and
the second routing device further comprises a second setting unit, a second request sending unit, a second VRRP transceiving unit, and a second determining unit, wherein
the second setting unit is configured to set a VRRP state of the second routing device, wherein the second setting unit sets a VRRP state of the second routing device to a backup state after VRRP initialization, and the second setting unit retains the VRRP state of the second routing device as a current state when the second interface is down;
the second request sending unit is configured to send a gratuitous Address Resolution Protocol ARP packet to the access device through the fourth interface, so as to instruct the access device to direct user traffic to the second routing device;
the second VRRP transceiving unit is configured to receive and send a VRRP packet on the second interface; and
the second determining unit is configured to, after the second interface becomes up again after being down, determine whether the second routing device needs to retain the current VRRP state or to change into another VRRP state; and
if a determining result indicates that the VRRP master state needs to be changed into the backup state, the second routing device changes the VRRP state of the second routing device into the backup state; and
when the second interface is down and does not become up within a preset period, the second setting unit sets the VRRP state of the second routing device to a master state; and the second request sending unit sends a gratuitous ARP packet to the access device through the fourth interface.

8. A system for network device redundancy backup, comprising a first routing device and a second routing device, wherein the first routing device comprises a first interface and a third interface; the second routing device comprises a second interface and a fourth interface; the first interface and the second interface run the Virtual Router Redundancy Protocol VRRP so that the first routing device and the second routing device form a VRRP backup group; the first interface communicates with the second interface; the first routing device communicates with an access device through the third interface; and the second routing device communicates with the access device through the fourth interface;
the first routing device further comprises a first setting unit, a first request sending unit, a first VRRP transceiving unit, and a first determining unit;
the second routing device further comprises a second setting unit, a second request sending unit, a second VRRP transceiving unit, and a second determining unit;
wherein:
the first setting unit is configured to set a VRRP state of the first routing device, wherein the first setting unit sets the VRRP state of the first routing device to a master state after VRRP initialization, and the first setting unit retains the VRRP state of the first routing device as a current state when the first interface is down;
the first request sending unit is configured to send a gratuitous Address Resolution Protocol ARP packet to the access device through the third interface, so as to instruct the access device to direct user traffic to the first routing device;
the first VRRP transceiving unit is configured to receive and send a VRRP packet between the first interface and the second interface;
the first determining unit is configured to, after the first interface becomes up again after being down, determine whether the first routing device needs to retain the current VRRP state or to change into another VRRP state; and
if a determining result indicates that the VRRP master state needs to be retained, the first request sending unit sends a gratuitous ARP packet to the third device through the third interface; and the first VRRP transceiving unit sends a VRRP packet to the second routing device through the first interface, so that the second routing device changes a VRRP state of the second routing device into a backup state;
the second setting unit is configured to set a VRRP state of the second routing device, and the second setting unit sets a VRRP state of the second routing device to a backup state after VRRP initialization;
when the second interface is down, the second setting unit retains the VRRP state of the second routing device as a current state;
the second request sending unit is configured to send a gratuitous ARP packet to the access device through the fourth interface, so as to instruct the access device to direct user traffic to the second routing device;
the second VRRP transceiving unit is configured to receive and send a VRRP packet between the second interface and the first interface;
the second determining unit is configured to, after the second interface becomes up again after being down, determine whether the second routing device needs to retain the current VRRP state or to change into another VRRP state; and
if a determining result indicates that the VRRP master state needs to be changed into the backup state, the second routing device changes the VRRP state of the second routing device into the backup state; and
when the second interface is down and does not become up within a preset period, the second setting unit sets the VRRP state of the second routing device to a master state; and the second request sending unit sends a gratuitous ARP packet to the access device through the fourth interface.
